# EUROPEAN PATENT SPECIFICATION

(11) **EP 4 459 722 B1**
(45) Date of publication and mention of the grant of the patent: **30.09.2026**
(21) Application number: 24745331.9
(22) Date of filing: 11.01.2024
(51) Int. Cl.: H01M 4/62, H01M 4/04, H01M 4/139, H01M 4/02, H01M 10/42, H01M 50/434

(54) **SECONDARY BATTERY COMPRISING BOTH ANODE MIXTURE PREPARED USING ANODE AQUEOUS BINDER IN WHICH CMC AND SBR ARE ADDED FOR IMPROVEMENT IN ADHESIVE STRENGTH AND FLEXIBILITY, AND CERAMIC POWDER HAVING MAGNETIC BODIES FOR IMPROVING SAFETY**
SEKUNDÄRBATTERIE MIT CMC UND SBR ENTHALTENDEM ANODENGEMISCH UND KERAMISCHEM PULVER
BATTERIE SECONDAIRE COMPRENANT À LA FOIS UN MÉLANGE D'ANODE PRÉPARÉ À L'AIDE D'UN LIANT AQUEUX D'ANODE DANS LEQUEL SONT AJOUTÉS DE LA CMC ET DU SBR POUR UNE AMÉLIORATION DE LA FORCE ADHÉSIVE ET DE LA FLEXIBILITÉ, ET POUDRE DE CÉRAMIQUE POSSÉDANT DES CORPS MAGNÉTIQUES POUR RENFORCER LA SÉCURITÉ

(30) Priority: 25.01.2023 KR 20230009664
(43) Date of publication of application: 06.11.2024
(73) Proprietor: i-chemical Co.,Ltd., Ulsan 44905 (KR)
(72) Inventor: HAM, Dongkon, Ulsan 44646 (KR); KIM, Min, Ulsan 44430 (KR); YOO, Seungmin, Ulsan 44007 (KR)
(74) Representative: Appleyard Lees IP LLP
(86) International application number: PCT/KR2024/000554
(87) International publication number: WO 2024/158158

(56) References cited:
- DE-A1- 102013 224 251
- JP-A- 2001 313 025
- JP-A- 2020 155 252
- KR-A- 20120 126 630
- KR-A- 20210 006 951
- KR-A- 20220 120 268
- US-A1- 2012 288 736
- SHEN KANG ET AL: "Magnetic Field-Suppressed Lithium Dendrite Growth for Stable Lithium-Metal Batteries", vol. 9, no. 20, 3 April 2019 (2019-04-03), Weinheim, XP093194744, ISSN: 1614-6832, Retrieved from the Internet <URL:https://onlinelibrary.wiley.com/doi/full-xml/10.1002/aenm.201900260> DOI: 10.1002/aenm.201900260
- SHEN KANG, WANG ZENG, BI XUANXUAN, YING YAO, ZHANG DUO, JIN CHENGBIN, HOU GUANGYA, CAO HUAZHEN, WU LIANKUI, ZHENG GUOQU, TANG YIPI: "Magnetic Field–Suppressed Lithium Dendrite Growth for Stable Lithium‐Metal Batteries", ADVANCED ENERGY MATERIALS, WILEY - V C H VERLAG GMBH & CO. KGAA, DE, vol. 9, no. 20, 1 May 2019 (2019-05-01), DE , XP093194744, ISSN: 1614-6832, DOI: 10.1002/aenm.201900260

## Description

### [TECHNICAL FIELD]

The disclosure relates to a secondary battery having a positive electrode current collector and a negative electrode current collector.

### [BACKGROUND ART]

A lithium secondary battery using lithium (Li) ions during electrical charge and discharge has higher energy density and discharging voltage than other secondary batteries, and is thus widely applied to not only small portable devices such as a mobile phone but also large means of transportation such as an electric vehicle.

In the lithium secondary battery, an anode mixture containing an anode active material is applied to a negative electrode current collector, and metal crystals separated from the negative electrode current collector as the charge and the discharge are repeated are likely to grow up to irregular acicular dendrites. Such dendrites cause a problem of penetrating a separator, and lead to electrical short-circuits and explosions.

Meanwhile, the anode mixture contains a negative electrode aqueous binder that makes the anode active material be adhered to the negative electrode current collector. During the charge and the discharge, lithium ions are intercalated into or deintercalated from the anode active material, thereby causing a problem of separation between the anode active material and the negative electrode current collector due to change in the volume of the anode active material. This separation reduces the charge/discharge capacity and shortens the lifespan.

### [TECHNICAL PROBLEM]

An aspect of the disclosure is to provide a secondary battery that can prevent a separator from being penetrated by a dendrite.

Another aspect of the disclosure is to provide a secondary battery that can suppress separation between an anode active material and a negative electrode current collector even though charge and discharge are repeated.

### [TECHNICAL SOLUTION]

According to an embodiment of the disclosure, a secondary battery includes: a positive electrode current collector to which a cathode mixture containing a cathode active material is applied; a negative electrode current collector to which an anode mixture containing an anode active material is applied; a separator interposed between the positive electrode current collector and the negative electrode current collector, and having magnetism; and an accommodating layer provided between the negative electrode current collector and the separator, and accommodating ceramic powder including a magnetic material to move toward one side of the separator based on the magnetism of the separator.

Thus, the ceramic powder having the magnetic material is arranged along the longitudinal direction of the separator as the accommodating layer moves close to the separator based on increase in the volume of the anode active material, thereby preventing dendrites from coming into contact with the separator. Therefore, the separator is prevented from being penetrated by the dendrites.

The accommodating layer adheres to one side of the anode mixture in a gel state. Thus, the ceramic powder is improved in fluidity, thereby being easily aligned along the longitudinal direction of the separator, and allowing lithium ions to move easily in a discharge state.

The accommodating layer includes pores formed on one side thereof and having a diameter smaller than the diameter of the ceramic powder and larger than the diameters of ions moving through an electrolyte. Thus, the ceramic powder is prevented from getting out of the accommodating layer, and the mobility of ions between the cathode and the anode is ensured.

The ceramic powder has a polyhedral shape. Thus, the separator is more effectively prevented from being penetrated by the dendrites.

The ceramic powder including the magnetic material is coated with a coating agent of a water-soluble resin. Thus, the magnetic material is prevented from getting out of the ceramic powder.

### [ADVANTAGEOUS EFFECTS]

According to the disclosure, there is provided a secondary battery capable of preventing a separator from being penetrated by a dendrite.

Further, according to the disclosure, there is provided a secondary battery capable of suppressing separation between an anode active material and a negative electrode current collector even though charge and discharge are repeated.

### [DESCRIPTION OF DRAWINGS]

FIG. 1 shows cross sections of a secondary battery according to an embodiment of the disclosure.
FIG. 2 shows an example of a separator and ceramic powder of FIG. 1.
FIG. 3 shows an example of the shape of the ceramic powder of FIG. 1 and coating agents for the ceramic powder.

### [BEST MODE]

Hereinafter, exemplary embodiments will be described in detail with reference to accompanying drawings. The exemplary embodiments are to make description detailed enough for a person having ordinary knowledge in the art, to which the disclosure pertains, to easily implement the disclosure, but are not intended to limit the technical spirit and scope of the disclosure.

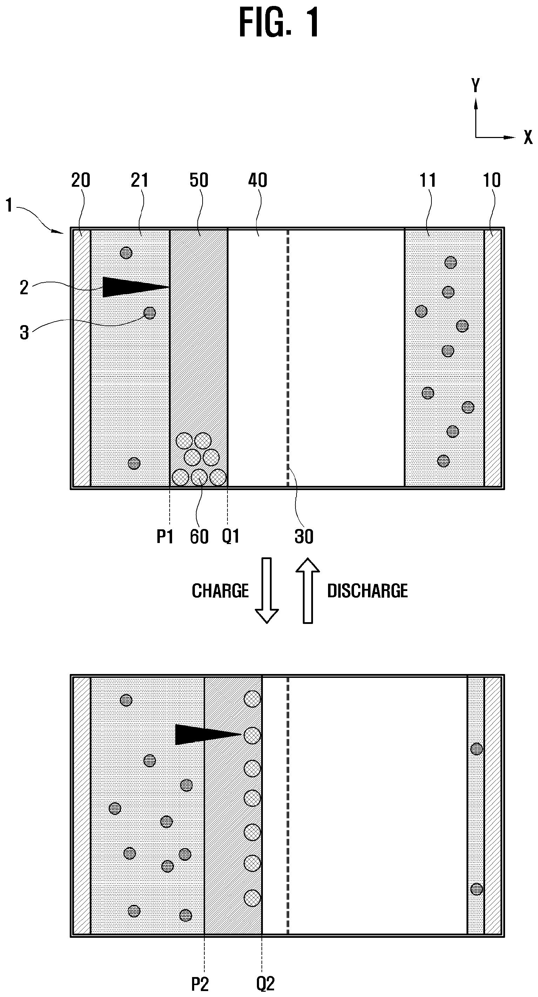

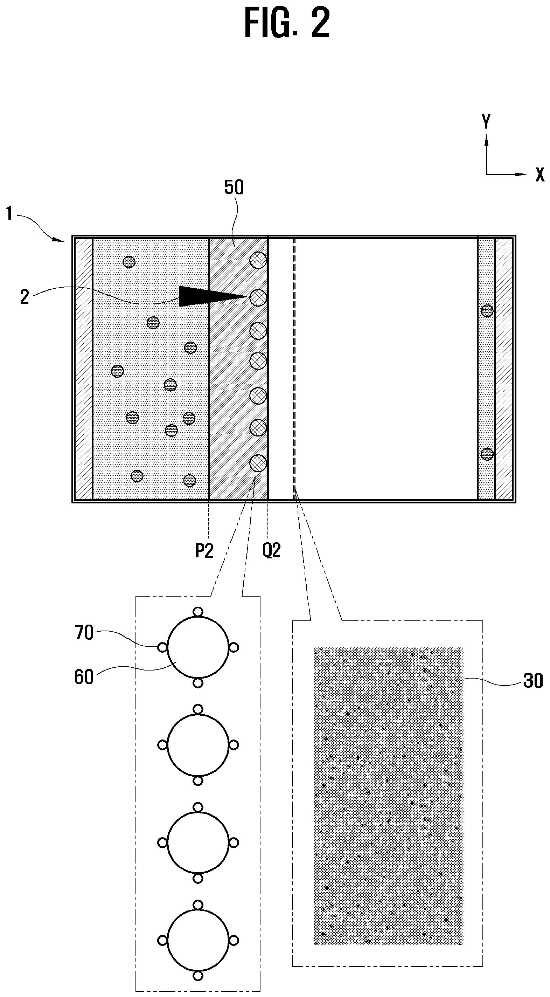

FIG. 1 shows cross sections of a secondary battery 1 according to an embodiment of the disclosure, and FIG. 2 shows an example of a separator 30 and ceramic powder 60 of FIG. 1.

Below, the structure of the secondary battery 1 according to an embodiment of the disclosure will be described in detail with reference to FIGS. 1 and 2.

According to this embodiment, the secondary battery 1 includes electrode current collectors 10 and 20. The electrode current collectors 10 and 20 refer to portions where the movement of ions 3 occurs during an electrochemical reaction of an active material, and includes a positive electrode current collector 10 and a negative electrode current collector 20 according to the type of electrode.

The positive electrode current collector 10 and the negative electrode current collector 20 are provided as plates or foils having a thickness of 300~500 µm, and made of a material having high conductivity without causing chemical change in the secondary battery 1.

The positive electrode current collector 10 may be implemented with stainless steel, aluminum, nickel, titanium, calcined carbon, etc., or may be implemented with aluminum or stainless steel, the surface of which is treated with carbon, nickel, titanium, silver, etc. The negative electrode current collector 20 may be implemented with copper, stainless steel, aluminum, nickel, titanium, calcined carbon, etc., or may be implemented with copper or stainless steel, the surface of which is treated with carbon, nickel, titanium, silver, etc.

When the secondary battery 1 is implemented as a lithium secondary battery, the positive electrode current collector 10 and the negative electrode current collector 20 may be implemented as aluminum and copper, respectively. The lithium secondary battery is charged while ions 3 on a cathode side move to an anode side, and discharged while ions 3 on the anode side move to the cathode side.

A cathode mixture 11 containing a cathode active material is applied to the positive electrode current collector 10. The cathode active material is lithium transition metal oxide and contains two or more transition metals. For example, the cathode active material is implemented as a layered compound such as lithium cobalt oxide (LiCoO₂) and lithium nickel oxide (LiNiO₂) substituted with at least one transition metal, or implemented as lithium manganese oxide, lithium nickel cobalt manganese complex oxide, olivine-based lithium metal phosphate, etc. substituted with at least one transition metal, but is not limited thereto.

An anode mixture 21 containing an anode active material is applied to the negative electrode current collector 20. The anode active material may be implemented as natural graphite, artificial graphite, expanded graphite, carbon fiber, non-graphitizable carbon, carbon black, carbon nanotubes, fullerene, activated carbon, or implemented as aluminum, silicon, silver, magnesium, manganese, phosphorus, lead, titanium or the like metal or compounds thereof, which can be alloyed with lithium, but is not limited thereto.

The cathode mixture 11 and the anode mixture 21 contain conductive materials. The conductive material may further improve the conductivity of the electrode active materials (the cathode active material and the anode active material). The conductive material may be implemented as a material that has conductivity without causing chemical changes in the secondary battery 1. For example, the conductive material includes, but not limited to, graphite such as natural graphite and artificial graphite; carbon black such as acetylene black, Ketjen black, channel black, furnace black, lamp black and summer black; conductive fiber such as carbon fiber and metal fiber; metal powders such as carbon fluoride, aluminum and nickel powders; conductive whisker such as zinc oxide and potassium titanate; conductive metal oxides such as titanium oxide; and conductive materials such as polyphenylene derivatives, but is not limited thereto.

The cathode mixture 11 and the anode mixture 21 include binders. The binder makes the electrode active material firmly combine with the conductive material, and makes the electrode active material firmly adhere to the electrode current collectors 10 and 20. The cathode binder is applied to the combination and adhesion of the cathode active material, and the anode binder is applied to the combination and adhesion of the anode active material.

The cathode binder and anode binder may be implemented as aqueous binders such as polyvinylidene fluoride (PVdF), but are not limited thereto. For example, the aqueous binder includes carboxymethyl cellulose (CMC), styrene-butadiene rubber (SBR), etc. Using CMC and SBR improves the adhesion and fluidity of the aqueous binder for the electrode current collectors 10 and 20. Further, SBR is environment-friendly and improves the capacity and initial charge/discharge efficiency of the secondary battery 1 by reducing binder content to be used.

According to various embodiments, the binder may be implemented as a silane coupling agent having the following chemical formula.

R-(CH₂)ₙ-Si-Xₘ

Where, R is a group containing at least one reactive group capable of reacting with a polymer, X is a hydrolysable group or an alcohol group, m is an integer from 1 to 3, and n is an integer from 0 to 10. In this way, the binder containing the silane coupling agent ensures that the electrode active material adheres more firmly to the electrode current collectors 10 and 20 due to its high adhesion.

The secondary battery 1 includes the separator 30 interposed between the positive electrode current collector 10 and the negative electrode current collector 20. The separator 30 may be implemented as a thin film having multiple pores. The pore may have a diameter of 0.01 to 10 µm, and a thickness of 5 to 300 µm. The separator 30 may be implemented as an insulating thin film having high ion permeability and mechanical strength. For example, the separator 30 may be implemented as a sheet, a non-woven fabric, or the like made of a chemical-resistant and hydrophobic olefin-based polymer such as polypropylene; glass fiber; polyethylene; etc. When an electrolyte 40 described below is implemented as a solid electrolyte such as a polymer, the solid electrolyte may also serve as the separator 30.

According to various embodiments, the separator 30 may have magnetism. By adding magnetic particles when manufacturing the separator 30, the separator 30 may have magnetism. Alternatively, after manufacturing the separator 30, the surface of the separator 30 may be coated with magnetic particles so that the separator 30 can have magnetism. In this case, only one surface of the separator 30 on the side of the negative electrode current collector 20 between both surfaces thereof may be coated with magnetic particles.

According to various embodiments, the secondary battery 1 may include the electrolyte 40 filled between the positive electrode current collector 10 and the separator 30 and between the negative electrode current collector 20 and the separator 30. An aprotic organic solvent may be used as the electrolyte 40. The aprotic organic solvent includes, but not limited to, propylene carbonate, ethylene carbonate, butylene carbonate, dimethyl carbonate, diethyl carbonate, gamma-butylolactoneformamide, dimethylformamide, nitromethane, methyl formate, dioxorane derivatives, sulfolane, methyl sulfolane, propylene carbonate derivatives, tetrahydrofuran derivatives, ethyl propionate, etc. However, as described above, the electrolyte 40 may be implemented as an organic solid electrolyte, an inorganic solid electrolyte, etc.

According to various embodiments, the secondary battery 1 may include a casing that accommodates or surrounds the electrode current collectors 10 and 20, the separator 30, and the electrolyte 40. The casing may be implemented as an aluminum laminate film. The aluminum laminate film may include a plastic layer of PET or nylon, an aluminum layer, and an adhesive layer.

According to an embodiment, the secondary battery 1 includes an accommodating layer 50 provided between the negative electrode current collector 20 and the separator 30, and accommodating the ceramic powder 60 having a magnetic material 70 to move toward one side of the separator 30 based on the magnetism of the separator 30.

The magnetic material 70 may adhere to the surface of the ceramic powder 60. The ceramic powder 60 has a porous structure so that the magnetic material 70 can adhere to the ceramic powder 60 by stirring the magnetic material 70 in the ceramic powder 60. To improve the adhesion of the magnetic material 70, the magnetic material 70 may adhere to the ceramic powder 60 after applying adhesive to the porous structure of the ceramic powder 60.

The magnetic material 70 reacts to the magnetism of the separator 30 and causes the ceramic powder 60 to move toward one side of the separator 30. The particle-size distribution of the magnetic material 70 may range from 1 to 5 µm. When the particle size is smaller than 1 µm, the magnetic material 70 cannot exhibit sufficient magnetism and may have difficulty in reacting to the magnetism of the separator 30. When the particle size is larger than 5 µm, the magnetic material 70 may have difficulty in adhering to the ceramic powder 60.

The magnetic material 70 includes iron (Fe), nickel (Ni), cobalt (Co), etc. or oxides thereof. Alternatively, the magnetic material 70 may include a magnetic component.

Below, it will be described in detail that the ceramic powder 60 in the accommodating layer 50 moves based on the magnetism of the separator 30 and prevents dendrites 2 from penetrating the separator 30 when charging the secondary battery 1.

For convenience of description, it will be assumed that one side of the anode mixture 21 is at P1 in a discharge state. Even in the discharge state, a small number of ions 3 may be accommodated in the anode active material of the anode mixture 21. In the discharge state, one side of the accommodating layer 50 is at Q1.

In the discharge state, the accommodating layer 50 is spaced apart from the separator 30, and thus the magnetism of the separator 30 may not reach the magnetic material 70 of the ceramic powder 60 accommodated in the accommodating layer 50, or may be so small that the ceramic powder 60 cannot be moved. For example, the ceramic powder 60 in the discharge state may accumulate on the lower side of the accommodating layer 50 in the Y-axis direction by its own weight.

When the charge proceeds from the discharged state, a large number of ions 3 are accommodated in the anode active material, causing a volume change in the anode mixture 21 so that one side of the anode mixture 21 can move to P2, and one side of the accommodating layer 50 can move to Q2.

When the accommodating layer 50 approaches the separator 30 in the charge state, the magnetic material 70 of the ceramic powder 60 in the accommodating layer 50 reacts to the magnetism of the separator 30, and the ceramic powder 60 moves towards separator 30. For example, the ceramic powder 60 may be arranged or aligned along one side of the accommodating layer 50.

According to the related art, when metal crystals separated from the negative electrode current collector grow up to acicular dendrites, the dendrites protrude from the anode mixture and move in the X-axis direction to thereby penetrate the separator, particularly in the charge state where the anode mixture approaches the separator. When the separator is penetrated by the dendrites, it may cause short-circuits and explosions.

Accordingly, when the ceramic powder 60 is arranged or aligned along one side of the accommodating layer 50 in the charged state as in this embodiment, the ceramic powder 60 prevents the dendrites 2 protruding from the anode mixture 21 from reaching or coming into contact with the separator 30. Therefore, the short-circuit and the explosion caused as the dendrites 2 penetrate the separator 30 are prevented in advance, thereby providing the secondary battery 1 improved in safety.

According to various embodiments, the accommodating layer 50 may be provided in a gel state. When the accommodating layer 50 is provided in a solid state, the fluidity of the ceramic powder 60 within the accommodating layer 50 is lowered, and thus the ceramic powder 60 may not be arranged along one side of the separator 30 even in an environment where the magnetism of the separator 30 is applied in the charge state.

On the other hand, when the accommodating layer 50 is provided in the gel state as in this embodiment, the fluidity of the ceramic powder 60 is ensured within the accommodating layer 50, and thus the ceramic powder 60 may be easily arranged along one side of the separator 30 in the charge state.

According to various embodiments, the accommodating layer 50 in the gel state may be implemented as LiTiO₃(LLTO), Li₁₊ₓAlₓTi₂₋ₓ(PO₄)₃(LATP), Li₁₊ₓTi₂₋ₓAlₓSi_{y}(PO₄)_{3-y}, Li7La3Zr2O12(LLZO), Li₁₊ₓAlₓGe₂₋ₓ(PO₄)₃(LAGP), LiAlₓZr₂₋ₓ(PO₄)₃, LiTiₓZr₂₋ₓ (PO₄)₃, etc., but is not limited thereto. The accommodating layer 50 may be implemented as a component different from that of the separator 30 and may not be mixed with the separator 30.

The viscosity of the accommodating layer 50 may be lower than or equal to 10 cP (centi poise). When the viscosity of the accommodating layer 50 is higher than 10 cP, the fluidity of the ceramic powder 60 may be lowered.

According to various embodiments, the accommodating layer 50 may adhere to one side of the anode mixture 21. During the discharge, the volume of the anode mixture 21 changes as ions 3 are deintercalated from the anode active material, and thus one side of the anode mixture 21 moves from P2 to P1. When the accommodating layer 50 adheres to one side of the anode mixture 21 as in this embodiment, one side of the accommodating layer 50 also easily moves from Q2 to Q1 in conjunction with the movement of the anode mixture 21.

When the ceramic powder 60 is arranged or aligned along one side of the separator 30, the ceramic powder 60 may interfere with the movement of ions 3 during the discharge. However, the ceramic powder 60 accumulates on the lower side of the accommodating layer 50 as one side of the accommodating layer 50 moves from Q2 to Q1, thereby facilitating the movement of ions 3.

According to various embodiments, a pore having a diameter smaller than the diameter of the ceramic powder 60 and larger than the diameter of the ions 3 moving through the electrolyte 40 may be formed on one side of the accommodating layer 50.

Because the diameter of the pore formed on one side of the accommodating layer 50 is smaller than the diameter of the ceramic powder 60, the ceramic powder 60 is prevented from getting out of the accommodating layer 50 toward the electrolyte 40. Because the diameter of the pore is larger than the diameter of the ions 3, the ions 3 can smoothly move during the charge and the discharge.

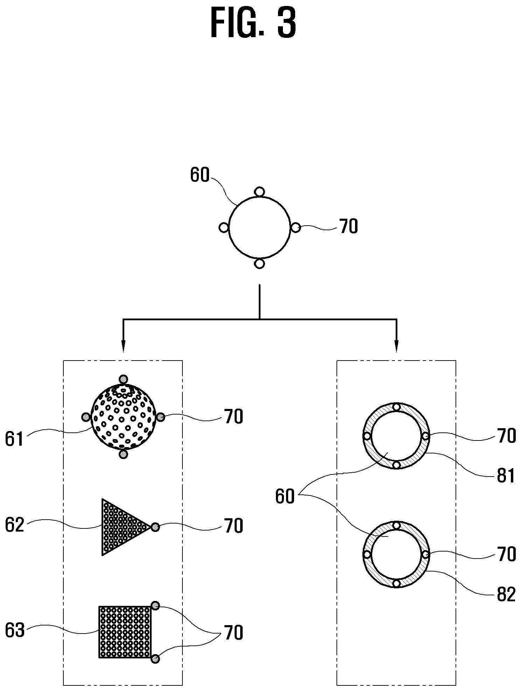

FIG. 3 shows an example of the shape of the ceramic powder 60 of FIG. 1 and coating agents for the ceramic powder 60.

As shown in FIG. 3, the ceramic powder 60 may have a polyhedral shape. For example, the ceramic powder 60 may be provided as a polyhedron, such as ceramic powder 61 having a circular cross-section, ceramic powder 62 having a triangular cross-section, and ceramic powder 63 having a square cross-section. In particular, when the ceramic powder 60 is provided as the polyhedral ceramic powder 61 and 62, the magnetic material 70 adheres to the polyhedral ceramic powder 61 and 62 so that the surface of the polyhedral ceramic powder 61 and 62 can face the -X axis direction in the charge state. Thus, an area for blocking the dendrites 2 is enlarged, thereby more easily preventing the dendrites 2 from penetrating the separator 30.

According to various embodiments, the ceramic powder 60 may be coated with a coating agent 81 of a water-soluble resin. The coating agent 81 of the water-soluble resin may include water-soluble urethane, water-soluble acrylic, water-soluble ethylene vinylacetate copolymer (EVA), etc. The water-soluble acrylic may be used by copolymerizing methacrylate resin, styrene, acrylic acid, methacrylic acid, and glycidyl methacrylate, but is not limited thereto. The coating agent 81 of the water-soluble resin prevents the magnetic material 70 adhering to the ceramic powder 60 from being separated from the ceramic powder 60 or makes the magnetic material 70 incompletely adhering to the ceramic powder 60 solidarily adhere to the ceramic powder 60.

According to various embodiments, the ceramic powder 60 having the magnetic material 70 and a coating agent aqueous solution may be stirred by a stirrer so that the coating agent 81 can be uniformly formed on the surface of the ceramic powder 60. After the coating process, a drying process or a curing process may be added to expose the coating agent 81 to room temperature for a predetermined period of time so that the coating agent 81 can be firmly coated on the surface of the ceramic powder 60.

According to various embodiments, a coating agent 82 may have magnetism. In other words, the coating agent 82 may contain iron, nickel, cobalt, etc. or oxides thereof. The components of the coating agent 82 may be the same as or different from the magnetic material 70. The coating agent 82 not only prevents the magnetic material 70 from being separated from the ceramic powder 60, but also reacts together with the magnetic material 70 to the magnetism of the separator 30, thereby assisting the ceramic powder 60 in moving more quickly along one side of the accommodating layer 50.

Although a few exemplary embodiments of the disclosure have been described in detail, various changes may be made in these exemplary embodiments without departing from the scope defined in the appended claims.

## Claims

1. A secondary battery comprising:
a positive electrode current collector to which a cathode mixture containing a cathode active material is applied;
a negative electrode current collector to which an anode mixture containing an anode active material is applied;
a separator interposed between the positive electrode current collector and the negative electrode current collector, and having magnetism; and
an accommodating layer provided between the negative electrode current collector and the separator, and accommodating ceramic powder comprising a magnetic material to move toward one side of the separator based on the magnetism of the separator.

2. The secondary battery of claim 1, wherein the accommodating layer adheres to one side of the anode mixture in a gel state.

3. The secondary battery of claim 1, wherein the accommodating layer comprises pores formed on one side thereof and having a diameter smaller than the diameter of the ceramic powder and larger than the diameters of ions moving through an electrolyte.

4. The secondary battery of claim 1, wherein the ceramic powder has a polyhedral shape.

5. The secondary battery of claim 1, wherein the ceramic powder comprising the magnetic material is coated with a coating agent of a water-soluble resin.

## Patentansprüche

1. Sekundärbatterie, die Folgendes umfasst:
einen positiven Elektrodenstromkollektor, auf den ein Kathodengemisch aufgebracht ist, das ein kathodenaktives Material enthält;
einen negativen Elektrodenstromkollektor, auf den ein Anodengemisch aufgebracht ist, das ein anodenaktives Material enthält;
einen Separator, der zwischen dem positiven Elektrodenstromkollektor und dem negativen Elektrodenstromkollektor angeordnet ist und Magnetismus aufweist; und
eine Aufnahmeschicht, die zwischen dem negativen Elektrodenstromkollektor und dem Separator vorgesehen ist, und keramisches Pulver, das ein magnetisches Material umfasst, aufnimmt, um sich basierend auf dem Magnetismus des Separators zu einer Seite des Separators zu bewegen.

2. Sekundärbatterie nach Anspruch 1, wobei die Aufnahmeschicht an einer Seite des Anodengemischs in einem Gelzustand anhaftet.

3. Sekundärbatterie nach Anspruch 1, wobei die Aufnahmeschicht Poren umfasst, die auf einer Seite davon gebildet sind und einen Durchmesser aufweisen, der kleiner als der Durchmesser des keramischen Pulvers und größer als die Durchmesser von Ionen ist, die sich durch einen Elektrolyten bewegen.

4. Sekundärbatterie nach Anspruch 1, wobei das keramische Pulver eine polyedrische Form aufweist.

5. Sekundärbatterie nach Anspruch 1, wobei das keramische Pulver, das das magnetische Material umfasst, mit einem Beschichtungsmittel aus einem wasserlöslichen Harz beschichtet ist.

## Revendications

1. Batterie secondaire comprenant :
un collecteur de courant d'électrode positive sur lequel est appliqué un mélange de cathode contenant un matériau actif de cathode ;
un collecteur de courant d'électrode négative sur lequel est appliqué un mélange d'anode contenant un matériau actif d'anode ;
un séparateur interposé entre le collecteur de courant d'électrode positive et le collecteur de courant d'électrode négative, et présentant un magnétisme ; et
une couche d'accueil disposée entre le collecteur de courant d'électrode négative et le séparateur, et une poudre de céramique d'accueil comprenant un matériau magnétique destiné à se déplacer vers un côté du séparateur en fonction du magnétisme du séparateur.

2. Batterie secondaire selon la revendication 1, dans laquelle la couche d'accueil adhère à un côté du mélange d'anode dans un état de gel.

3. Batterie secondaire selon la revendication 1, dans laquelle la couche d'accueil comprend des pores formés sur un côté de celle-ci et ayant un diamètre inférieur au diamètre de la poudre de céramique et supérieur aux diamètres d'ions se déplaçant à travers un électrolyte.

4. Batterie secondaire selon la revendication 1, dans laquelle la poudre de céramique a une forme polyédrique.

5. Batterie secondaire selon la revendication 1, dans laquelle la poudre de céramique comprenant le matériau magnétique est revêtue par un agent de revêtement d'une résine soluble dans l'eau.
